# EUROPEAN PATENT SPECIFICATION

(11) **EP 2 371 680 B1**
(45) Date of publication and mention of the grant of the patent: **20.02.2013**
(21) Application number: 11155250.1
(22) Date of filing: 21.02.2011
(51) Int. Cl.: B62D 25/08

(54) **Front vehicle body structure**
Vorderteilkonstruktion einer Fahrzeugkarosserie
Structure de carrosserie frontale d'un véhicule

(30) Priority: 23.03.2010 JP 2010066762; 10.06.2010 JP 2010133014
(43) Date of publication of application: 05.10.2011
(73) Proprietor: Honda Motor Co., Ltd., Tokyo 107-8556 (JP)
(72) Inventor: Yasuhara, Shigeto, Saitama 351-0193 (JP); Ichikawa, Shuji, Saitama 351-0193 (JP); Kihara, Makoto, Saitama 351-0193 (JP); Kominamidate, Masami, Saitama (JP); Shirasaya, Masahito, Saitama (JP)
(74) Representative: Feller, Frank

(56) References cited:
- JP-A- 2007 030 627
- JP-A- 2009 166 719

## Description

The present invention relates to a front vehicle body structure which includes a joint cover having an opening for passage therethrough of a steering shaft, and a dashboard cross member extending in a vehicle width direction to enforce a dashboard lower panel. The present invention also relates to a front vehicle body structure which includes a dashboard lower panel partitioning between a passenger compartment and an engine room, and in which a steering shaft is passed through the dashboard lower panel.

A front vehicle body structure according to the preamble of claim 1 is known from JP 2007-30627.

JP 2009-166719 discloses a further front vehicle body structure having a passage for laying exhaust pipes from an engine room to the lower side of a vehicle while avoiding a respective passenger compartment.

In many of the conventionally-known front vehicle body structures, a dashboard lower panel, constituting a front wall portion of a passenger compartment, is fixedly connected at its opposite ends to left and right front pillars each having a closed section and fixedly connected at its upper edge to a cowl having a closed section, and a dashboard cross member is joined to and extends along the lower edge of the dashboard lower panel. Namely, closed sections are formed around the dashboard lower panel, so that rigidity with which the dashboard lower panel is supported can be enhanced (see, for example, Japanese Patent Application Laid-Open Publication No. H10-45034 that will hereinafter be referred to as "patent literature 1").

In the front vehicle body structure disclosed in patent literature 1, the dashboard cross member extending in a vehicle width direction is provided on an engine-room side of an intermediate-height portion of the dashboard lower panel, and an opening for passage therethrough of a steering shaft is formed under the dashboard cross member, avoiding the dashboard cross member. Thus, with the front vehicle body structure disclosed in patent literature 1, an electric power steering apparatus (EPS) provided adjacent to the engine room cannot be disposed close to the dashboard lower panel, so that the engine room cannot be reduced in size as desired.

Further, many of the conventionally-known front vehicle body structures include a reinforcement fixedly joined to the dashboard lower panel to reinforce a brake booster mounting portion. Left and right longitudinal frames, including left and right front side frames etc., are disposed beneath and along the dashboard lower panel. The dashboard cross member is fixedly connected at its opposite ends to the left and right longitudinal frames and fixedly connected at its middle portion in the vehicle width direction to a tunnel portion that is formed on the dashboard lower panel and extends in a front-rear direction of the vehicle.

The reinforcement includes a reinforcement body, and a reinforcing arm portion extending from the reinforcement body inwardly in the vehicle width direction and fixedly connected to a middle portion, in the vehicle width direction, of the dashboard cross member. Input load to the reinforcement can be dispersed via the reinforcement body and reinforcing arm to be transmitted to other parts of the vehicle body (see, for example, Japanese Patent Application Laid-Open Publication No. 2007-30627 that will hereinafter be referred to as "patent literature 2").

In the front vehicle body structure disclosed in patent literature 2, a steering shaft for steering the vehicle body is passed through the dashboard lower panel above the dashboard cross member. Thus, if it is desired to reduce the size of the vehicle body, for example, by providing the steering shaft in a lower position of the vehicle body, providing a steering gearbox in a more rearward position of the vehicle body and designing the engine room to a smaller length, the dashboard cross member would interfere with the steering shaft, so that the steering shaft cannot be provided in a lower position of the vehicle body as desired. Further, in the front vehicle body structure disclosed in patent literature 2, a steering opening is formed in the dashboard lower panel for passage therethrough of the steering shaft, and thus, an enhanced strength and rigidity are desired around the steering opening.

Further, at the time of a frontal collision of the vehicle, it is desired to prevent bending of the left and right longitudinal frames, including the front side frames, connected at their rear ends to the front ends of the floor frames and to smoothly disperse a collision load.

In view of the foregoing prior art problems, it is the main object of the present invention to provide an improved front vehicle body structure which can reduce the size of the engine room and thus realize a vehicle of short overhang design with a reduced length from front wheels to the front end of the vehicle.

It is another object of the present invention to provide an improved front vehicle body structure which allows the steering shaft to be provided in a lower position of the vehicle body and allows the steering gearbox to be provided in a more rearward position, to thereby reduce the length, in the front-rear direction, of the vehicle body.

In order to accomplish the above-mentioned objects, the present invention provides an improved front vehicle body structure which comprises: left and right front side frames extending in a front-rear direction of a vehicle body; a dashboard lower panel extending in a vehicle width direction to partition between an engine room and a passenger compartment; a joint cover having an opening formed therein for passage therethrough of a steering shaft; and a dashboard cross member extending in the vehicle width direction to reinforce the dashboard lower panel, and in which the dashboard lower panel has a vertical surface extending substantially vertically above respective slant portions of the left and right front side frames, and a slant surface slanting from the vertical surface obliquely downward toward a rear of the vehicle body via a bent portion of the dashboard lower panel. Further, in the front vehicle body structure of the present invention, the joint cover is provided on a side of the dashboard lower panel adjacent to the engine room, the dashboard cross member is provided on a side of the dashboard lower panel adjacent to the passenger compartment, the dashboard cross member includes separate left and right cross members that are constructed separately from each other and disposed to left and right, respectively, of the joint cover, and the left and right cross members are fixedly connected at respective one end portions to the joint cover with the dashboard lower panel sandwiched therebetween.

Because the joint cover is provided on one side of the dashboard lower panel adjacent to the engine room while the dashboard cross member is provided on the other side of the dashboard lower panel adjacent to the passenger compartment, a closed section can be defined adjacent to the passenger compartment by the dashboard lower panel and dashboard cross member. Thus, an electric power steering apparatus adjacent to the engine room can be disposed close to the dashboard lower panel, so that the engine room can be reduced in size. Namely, the front vehicle body structure of the present invention can not only secure a sufficient space within the engine room and but also realize a vehicle of short overhang design with a reduced length from front wheels to the front end of the vehicle.

Further, because the left and right cross members of the dashboard cross member are constructed separately from each other (located to the left and right of the joint cover) and are fixedly connected at their respective one end portions to the joint cover with the dashboard lower panel sandwiched therebetween, the front vehicle body structure of the present invention can achieve an increased strength of the dashboard lower panel and hence a high-rigidity vehicle body.

Preferably, in the front vehicle body structure of the present invention, the slant portion of each of the left and right front side frames includes a protruding portion that protrudes in a dogleg shape inwardly in the vehicle width direction, and the dashboard cross member is disposed on the inwardly protruding portions of the left and right front side frames. Such arrangements can prevent bending of the front side frames and allows an input force from the front side frames to be transmitted, via the joint cover and left right cross members, to a member, such as a front cross member, located rearward of the dashboard lower panel. As a result, the front vehicle body structure of the present invention can effectively reduce an amount of deformation of the vehicle body.

Preferably, in the front vehicle body structure of the present invention, the joint cover has: a bottom portion of a substantially circular shape having formed therein the opening for passage therethrough of the steering shaft; a step portion formed by side and rear peripheral regions of the bottom portion being raised upward; a front surface portion of a curved shape formed by a front peripheral region of the bottom portion being projected convexly outward; a front surface flange formed outside and around the front surface portion; and a circular flange formed continuously with the front surface flange and outside and around the step portion. Further, the left and right cross members each include a cross member body having a hat- or mountain-like cross-sectional shape, and upper and lower flanges formed at opposite edges of the hat- or mountain-like cross-sectional shape of the cross member body. The upper flange of each of the left and right cross members is fixedly connected to the front surface flange, while the lower flange of each of the left and right cross members is fixedly connected to the circular flange. With such arrangements, input force from the front side frames is transmitted along a first edge line formed between the bottom portion and the curved front surface portion and then along a second edge line formed continuously with the first edge line and between the bottom portion and the step portion, after which the input force is transmitted to the left and right cross members. In this way, the present invention can enhance a transfer efficiency of the left and right cross members.

Further, preferably, in the front vehicle body structure, the dashboard lower panel has a bead provided on a portion thereof covered with at least one of the left and right cross members, the bead extending in a longitudinal direction of the left and right cross members. Thus, the present invention can achieve an enhanced load transfer efficiency, in the vehicle width direction (i.e., left-right direction), of the dashboard cross member.

Furthermore, preferably, the left and right cross members and the joint cover are disposed on the bent portion of the dashboard lower panel. Thus, the dashboard lower panel can have an even further increased strength by virtue of a synergy effect between such disposed positions of the left and right cross members and joint cover and inherent high rigidity of the bent portion.

According to another aspect of the present invention, there is provided an improved front vehicle body structure, which comprises: a dashboard lower panel partitioning a vehicle body into an engine room and a passenger compartment; left and right longitudinal frames that include left and right front side frames fixedly connected at respective rear ends thereof to front ends of left and right floor frames and that extend in a front-rear direction of the vehicle body; a dashboard cross member extending in a vehicle width direction of the dashboard lower panel to connect to the left and right longitudinal frames; and a steering shaft passed through the dashboard lower panel and the dashboard cross member, and in which the dashboard lower panel includes: a vertical portion extending in a height direction of the vehicle body; a slant portion slanting from a lower end of the vertical portion downward toward the passenger compartment via a bent portion of the lower panel; a raised portion raised toward one of left and right sides of the bent portion and toward the engine room; and a steering opening formed in the raised portion for passage therethrough of the steering shaft. The dashboard cross member includes an annular portion having a cross-member-side opening formed therein, in opposed relation to the raised portion, for passage therethrough of the steering shaft. Further, a closed section is defined by the bent portion and the dashboard cross member as viewed from side, and the raised portion of the dashboard lower panel and the annular portion of the dashboard cross member overlap with each other.

Because the dashboard cross member includes the annular portion having the cross-member-side opening formed therein, in opposed relation to the raised portion, for passage therethrough of the steering shaft, a steering gearbox, to which the steering shaft is connected, can be provided in a more rearward position beneath the slant portion of the dashboard lower panel. Thus, an engine accommodated in the engine room can be disposed in a more rearward position closer to the dashboard lower panel. As a result, the length, in the front-rear direction, of the vehicle body can be reduced, which can thereby achieve a reduced size of the vehicle body. Further, because the closed section is defined by the bent portion and the dashboard cross member as viewed from side and the raised portion of the dashboard lower panel and the annular portion of the dashboard cross member overlap with each other, the present invention can not only achieve an enhanced or increased strength and rigidity around the steering opening, but also secure a sufficient strength and rigidity of the dashboard cross member.

Preferably, in the front vehicle body structure of the present invention, the left and right longitudinal frames each have an inwardly curved frame portion that is curved inwardly of the vehicle body and has an inwardly protruding portion, and the dashboard cross member is disposed on the inwardly protruding portions of the left and right longitudinal frames. Thus, when a frontal collision of the vehicle happens, the present invention can prevent inward bending of the left and right longitudinal frames extending in the front-rear direction of the vehicle body, and thus, it can smoothly disperse a collision load.

Further, preferably, the closed section, defined by the bent portion and the dashboard cross member, has a parallelogram shape projecting toward the passenger compartment as viewed in side cross-section. Thus, the present invention can achieve an increased strength and rigidity of the dashboard cross member. Further, the annular portion, continuing with the first closed section, can supplement the strength and rigidity of the dashboard cross member.

Furthermore, preferably, the front vehicle body structure of the present invention further comprises a passenger-compartment-side cover member closing the cross-member-side opening, and an engine-room-side cover member closing the steering opening from a side of the engine room. Because of the provision of the cover, the steering opening can be formed in a relatively large size, which can facilitate operation for assembling the steering shaft.

Furthermore, preferably, a center tank storing fuel is disposed inwardly of the left and right longitudinal frames and beneath the passenger compartment, and the curved frame portions of the left and right longitudinal frames are curved inwardly in the vehicle width direction along the outer side surfaces of the engine room and the center tank, and the front vehicle body structure of the invention further comprises a front cross member interconnecting the inwardly protruding portions of the left and right longitudinal frames, the front cross member being disposed inwardly of the inwardly curved frame portions and behind the dashboard cross member. Thus, when a frontal collision happens, the present invention can more reliably prevent inward bending of the left and right longitudinal frames, extending in the front-rear direction of the vehicle body, than where only the dashboard cross member interconnects the inwardly protruding portions of the left and right longitudinal frames. In this way, the present invention allows a collision load to be dispersed more smoothly.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a plan view showing a first embodiment of a front vehicle body structure of the present invention;
Fig. 2 is a bottom view showing the front vehicle body structure of Fig. 1;
Fig. 3 is a perspective view of the front vehicle body structure of Fig. 1 as viewed from a passenger compartment of the vehicle;
Fig. 4 is a perspective view of the front vehicle body structure of Fig. 1 with a dashboard lower panel removed for clarity;
Fig. 5 is a left side view of the front vehicle body structure of Fig. 1
Fig. 6 is a perspective view showing a dashboard cross member of the front vehicle body structure of Fig. 1;
Fig. 7 is a perspective view showing how a load is transmitted via a joint cover of the front vehicle body structure of Fig. 1;
Fig. 8 is a perspective view of the dashboard cross member and joint cover of the front vehicle body structure of Fig. 1;
Fig. 9 is a sectional view taken along line 9 - 9 of Fig. 8;
Fig. 10 is a perspective view showing beads provided on the dashboard lower panel of the front vehicle body structure of Fig. 1; and
Fig. 11 is a sectional view taken along line 11 - 11 of Fig. 10.
Fig. 12 is a perspective view showing a second embodiment of the front vehicle body structure of the present invention;
Fig. 13 is a bottom view showing the front vehicle body structure of Fig. 12;
Fig. 14 is a sectional view taken along line 14 - 14 of Fig. 12;
Fig. 15 is a schematic sectional view of the front vehicle body structure of Fig. 14 together with component parts of a steering apparatus;
Fig. 16 is a sectional view taken along line 16 - 16 of Fig. 12;
Fig. 17 is a sectional view taken along line 17 - 17 of Fig. 12;
Fig. 18 is a sectional view taken along line 18 - 18 of Fig. 12;
Fig. 19 is a sectional view taken along line 19 - 19 of Fig. 12; and
Figs. 20A and 20B are views explanatory of behavior of the front vehicle body structure shown in Fig. 12.

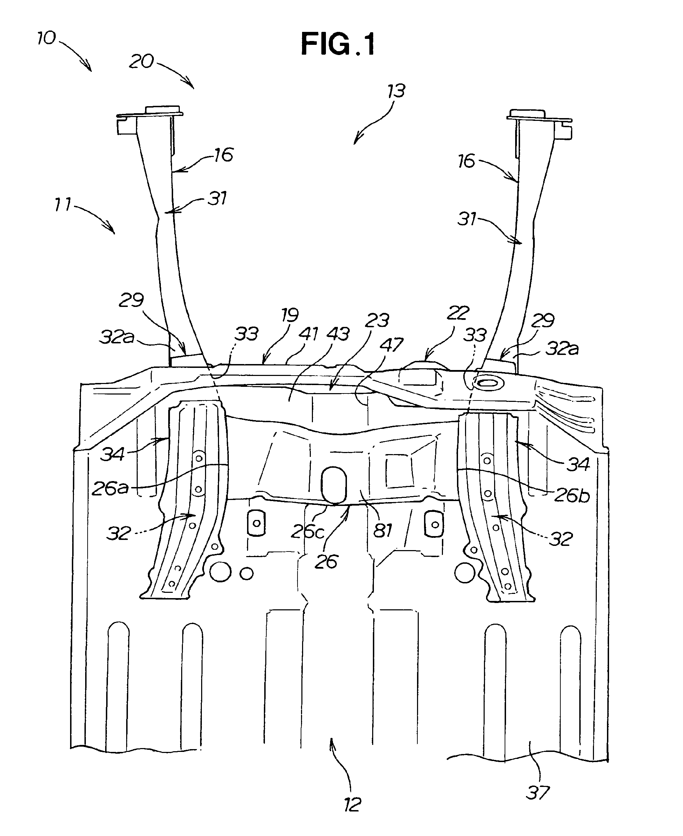

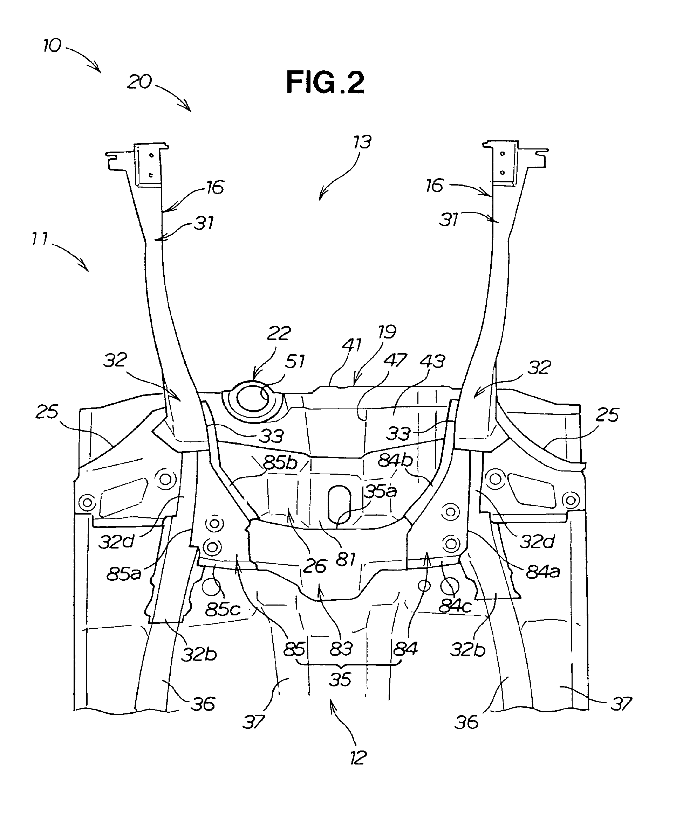

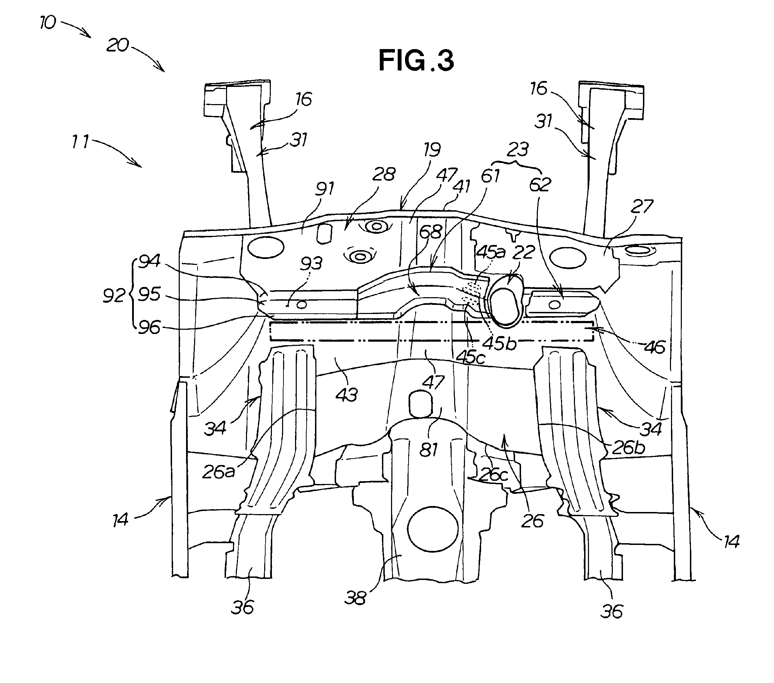

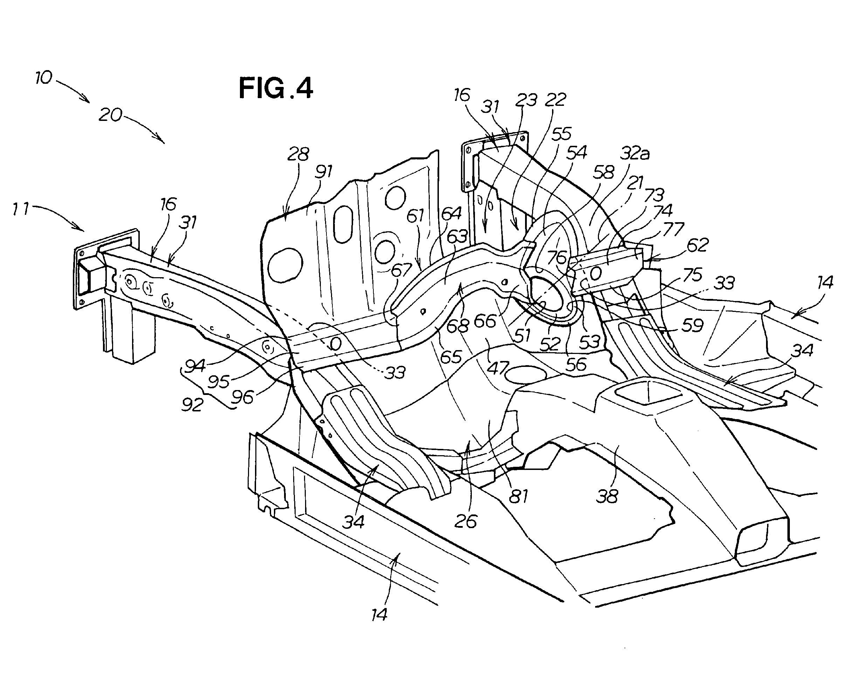

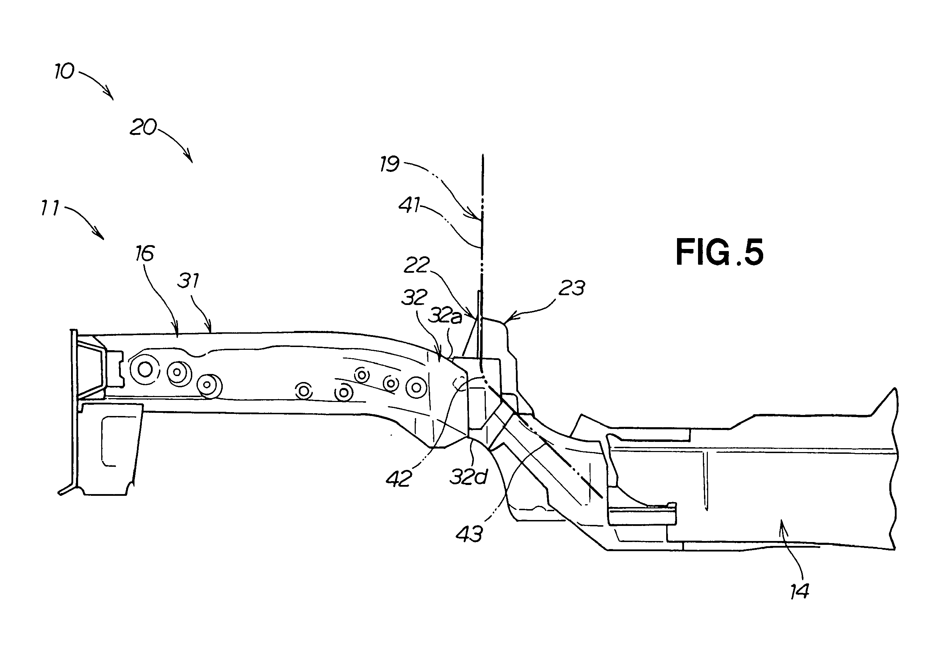

Initial reference is made to Figs. 1 and 2 showing, in plan view and bottom view, respectively, a front vehicle body structure 20 according to a first embodiment of the present invention. Fig. 3 is a perspective view of the front vehicle body structure 20 of Fig. 1 as viewed from a passenger compartment, Fig. 4 is a perspective view of the front vehicle body structure 20 of Fig. 1 with a dashboard lower panel removed for clarity, and Fig. 5 is a left side view of the front vehicle body structure 20 of Fig. 1. As shown in Figs. 1 to 5, a vehicle body 11 of a vehicle 10 includes: left and right front side frames 16 extending in a front-rear direction of the vehicle body; left and right side sills 14 disposed rearward of the left and right front side frames 16; left and right outriggers 25 extending from the outer side edge regions of slant portions 32 of the left and right front side frames 16 to be fixedly connected to the left and right side sills 14; and a front cross member 35 connecting between the inner sides of the slant portions 32 and having a front end 35a of an arch shape as viewed in plan. The vehicle body 11 also includes: the dashboard lower panel 19 partitioning between an engine room 13 and a passenger compartment 12; a joint cover 22 provided on a side of the dashboard lower panel 19 adjacent to the engine room 13 and having an opening 51 for passage therethrough of a steering shaft 21; a dashboard cross member 23 reinforcing the dashboard lower panel 19; and a dashboard lower panel extension 26 provided rearward of a middle portion of a slant surface 43 of the dashboard lower panel 19. The vehicle body 11 further includes: a brake-booster mounting reinforcement 27 provided on one end region of a vertical surface 41 of the dashboard lower panel 19; a dashboard lower panel reinforcing plate 28 provided on another end region of the vertical surface 41; and frame brackets (or front side frame brackets) 29 fixedly connecting the slant portions 32 of the left and right front side frames 16 and the vertical surface 41 of the dashboard lower panel 19.

In the first embodiment of the front vehicle body structure, the dashboard cross member 23 comprises separate left and right cross members 61 and 62 that are disposed to the left and right of the joint cover 22 and that are fixed connected at their respective one end portions 66 and 76 to left and right side portions of the joint cover 22 with the dashboard lower panel 19 sandwiched therebetween. With such arrangements, the front vehicle body structure 20 can significantly enhance the strength of the dashboard lower panel 19 and can realize a vehicle of short overhang design.

The left front side frame 16 includes a horizontal portion 31 extending substantially horizontally into the engine 13, the slant portion 32 slanting from the horizontal portion 31 obliquely rearwardly and downwardly. The right front side frame 16 is a member symmetrical to the left front side frame 16 about a longitudinal centerline of the vehicle body.

In each of the left and front side frames 16, the slant portion 32 has an inwardly protruding portion 33 protruding in a dogleg shape inwardly in the vehicle width direction. A frame bracket 29 is fixedly connected to an upper wall portion 32a of the slant portion 32. Further, a side frame reinforcing plate 34 for enhancing the strength and rigidity of the left front side frame 16 via the slant surface 43 of the dashboard lower panel 19.

The front cross member 35 extends between and is fixedly connected at its opposite ends to rear portions 32b of the slant portions 32 of the left and right front side frames 16, and left and right floor frames 36 extend from the rear portions 32b of the slant portions 32 of the left and right front side frames 16 toward the rear of the vehicle body.

The dashboard lower panel 19 includes: the vertical surface 41 extending substantially vertically above the slant portions 32 of the left and right front side frames 16; the slant surface 43 slanting from the vertical surface 41 obliquely downward toward the rear of the vehicle body via a bent portion 42; a plurality of beads 45a to 45c provided on a portion of the dashboard lower panel 19 covered with the left cross member 61 and extending in a longitudinal direction of the left cross member 61; a fragile portion 46 of a reduced strength formed to lie from ahead of the dashboard lower panel extension 26 to the bent portion 42; and a tunnel portion 47 provided on a middle region, in the vehicle width direction, of the dashboard lower panel 19 to extend from the bent portion 42 to the slant surface 43 and formed in a convex shape projecting toward the passenger compartment 12.

The reduced-strength fragile portion 46, formed to lie from ahead of the dashboard lower panel extension 26 to the bent portion 42, is intended to be deformed when a frontal collision of the vehicle happens. In this way, the instant embodiment can increase a collision stroke to thereby effectively absorb impact energy.

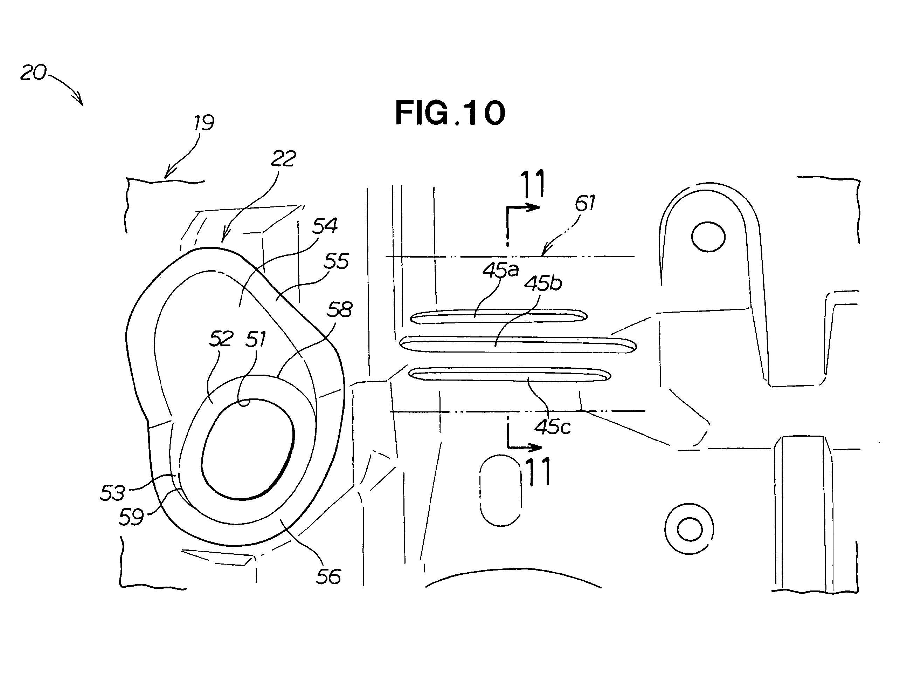

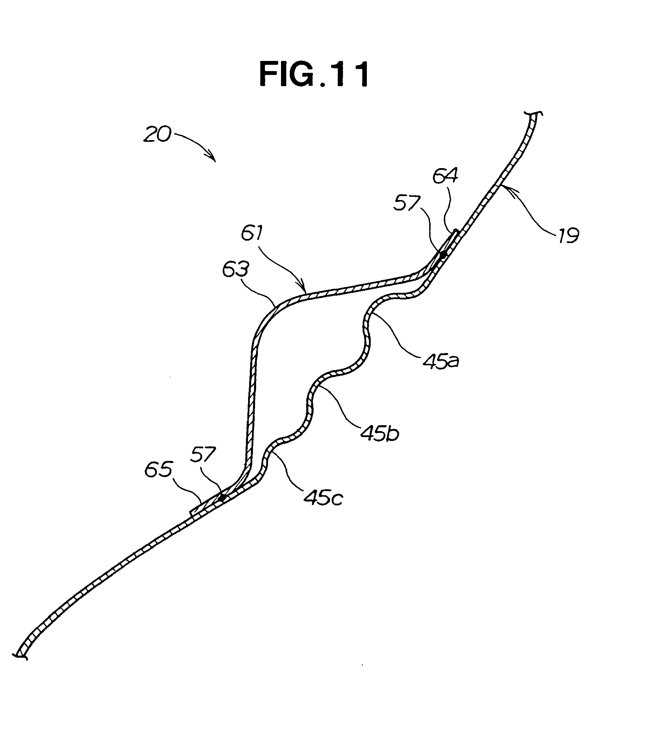

As shown in Figs. 10 and 11, the beads 45a to 45c provided on a portion of the dashboard lower panel 19 covered with the left cross member 61 and extending in the longitudinal direction of the left cross member 61 can achieve an enhanced load transfer efficiency, in the vehicle width direction (i.e., left-right direction) of the dashboard cross member 23.

The dashboard lower panel 19 is fixedly connected at its rear end to a floor 37 of the vehicle. A center tunnel section (bulge section) 38 extending in the front-rear direction of the vehicle body is formed in a middle region, in the vehicle width direction, of the floor 37 and extending in the front-rear direction of the vehicle body.

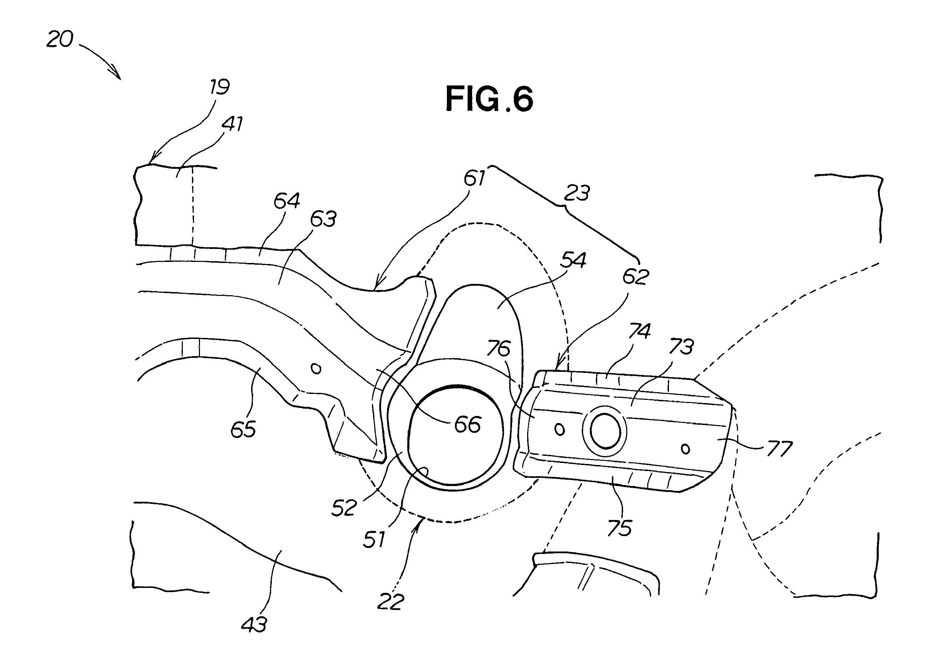

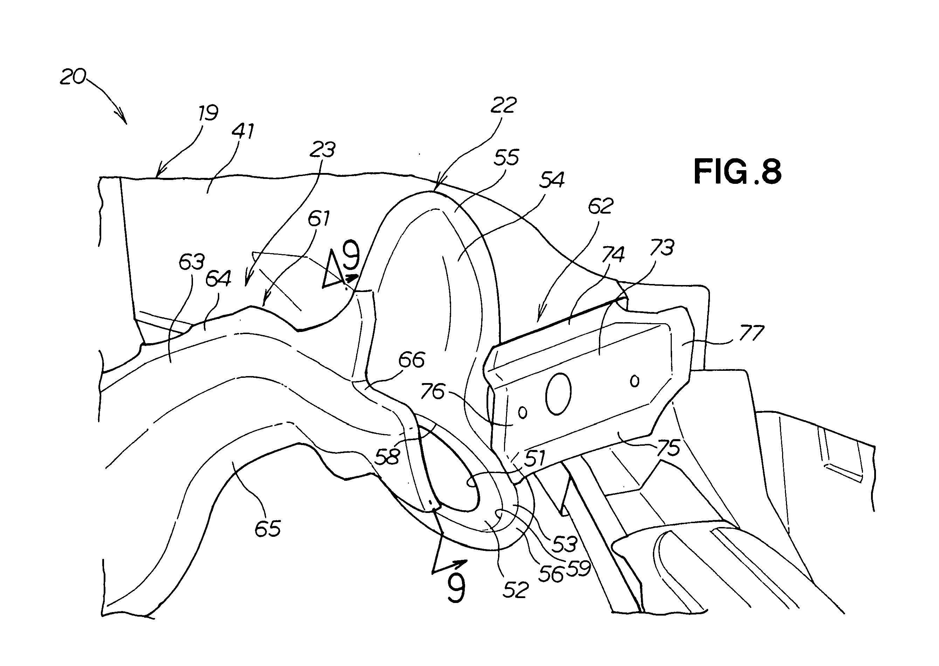

As shown in Figs. 6 and 8, the joint cover 22 has: the opening 51 for passage therethrough of the steering shaft 21; a bottom portion 52 of a substantially circular shape formed around the opening 51; a step portion 53 formed by side and rear peripheral regions of the bottom portion 52 being raised obliquely upward; a front surface portion 54 of a curved shape formed by a front peripheral region of the bottom portion 52 being projected convexly outward; a front surface flange 55 formed outside and around the front surface portion 54; and an annular flange 56 formed continuously with the front surface flange 55 and outside and around the step portion 53.

The joint cover 22 is provided on the side of the dashboard lower panel 19 adjacent to the engine room 13. The joint cover 22 further has a first edge line 58 (see Fig. 4 and 10) formed between the bottom portion 52 and the curved front surface portion 54, and a second edge line 59 (see Fig. 4 and 10) formed continuously with the first edge line 58 and between the bottom portion 52 and the step portion 53. The first edge line 58 and the second edge line 59 together define a generally circular shape.

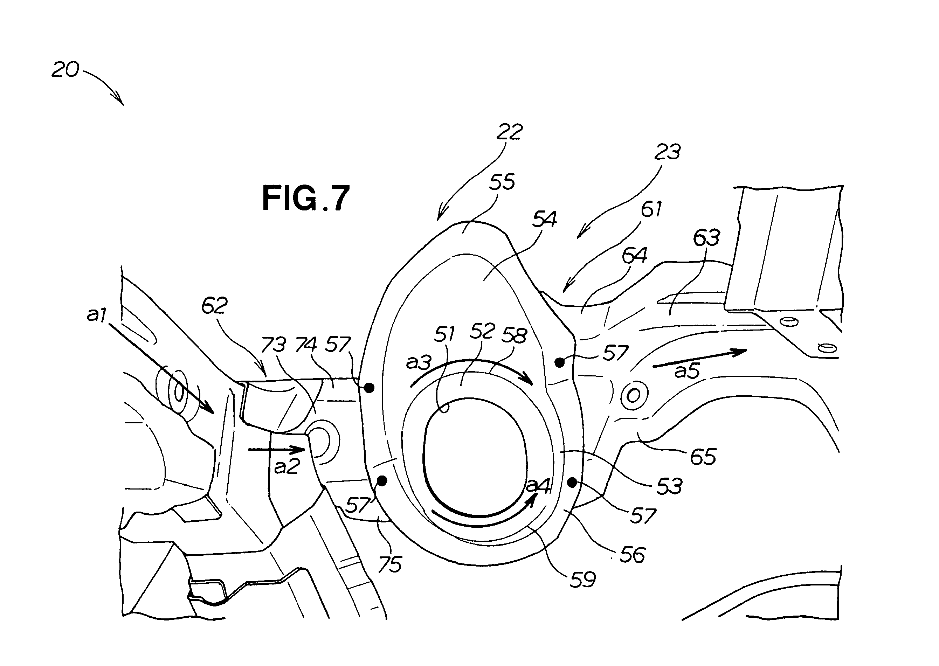

For example, once input force from the right front side frame 16 acts on the right cross member 62 as indicated by arrow a1 in Fig. 7, the input force is transmitted from the right cross member 62 to the joint cover 22, where the input force is not only transmitted along the first edge line 58, formed between the bottom portion 52 and the curved front surface portion 54, as indicated by arrow a3 and but also transmitted along the second edge line 59, formed continuously with the first edge line 58 between the bottom portion 52 and the step portion 53, as indicated by arrow a4. After that, the input force is transmitted to the left cross member 61 as arrow a5.

The dashboard cross member 23 is provided on the side of the dashboard lower panel 19 adjacent to the passenger compartment 12 and comprises the separate left and right cross members 61 and 62, as noted above. As shown in Fig. 4, the left cross member 61 includes a cross member body 63 having a hat- or mountain-like cross-sectional shape, and upper and lower flanges 64 and 65 formed along opposite upper and lower edges of the cross member body 53.

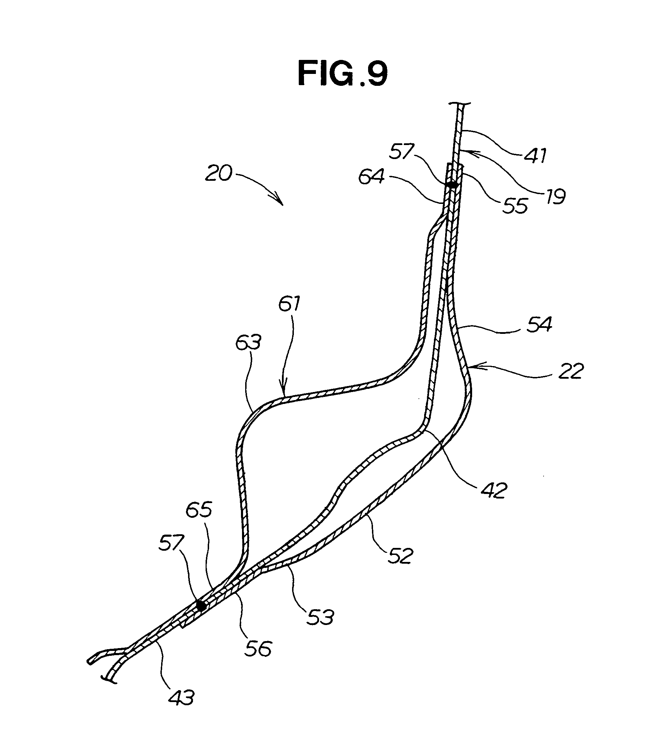

As shown in Figs. 7 and 9, the end portion 66 (Fig. 8) of the left cross member 61 (upper and lower flanges 64 and 65) facing the joint cover 22 is fixedly joined to the joint cover 22 by spot welding, as indicated at 57, with the dashboard lower panel 19 sandwiched therebetween.

As shown in Fig. 4, the left cross member 61 has a curved portion 68 extending along the tunnel portion 47. Despite the provision of the curved portion 68, the left cross member 61 can be easily made by form-molding or the like, and thus, the dashboard cross member 23 can be readily set at a desired height.

Further, as shown in Fig. 4, an end portion (joint portion) 67 of the left cross member 61 adjacent to the dashboard lower panel reinforcing plate 28 is formed in a substantially L cross-sectional shape, and the end portion (joint portion) 67 is fixedly joined to a bent portion 92 of the dashboard lower panel reinforcing plate 28.

Similarly to the left cross member 61, the right cross member 62 includes a cross member body 73 having a hat- or mountain-like cross-sectional shape, and upper and lower flanges 74 and 75 formed along opposite, upper and lower edges of the cross member body 73. The end portion 76 of the right cross member 62 (upper and lower flanges 74 and 75) facing the joint cover 22 is fixedly joined to the joint cover 22 by spot welding, as indicated at 57, with the dashboard lower panel 19 sandwiched therebetween. An end portion 77 of the right cross member 62 opposite from the end portion 76 facing the joint cover 22 is fixedly joined to the slant portion 32 of the right front side frame 16 via the slant surface 43.

As shown in Fig. 4, the dashboard cross member 23 is disposed near the inwardly protruding portion 33 protruding in a dogleg shape inwardly in the vehicle width direction. Thus, the dashboard cross member 23 can prevent unwanted bending of the front side frames 16 and transmit input force from the front side frames 16 to the rear of the vehicle body via the joint cover 22 and left and right cross members 61 and 62.

The dashboard cross member 23 is provided on the side of the dashboard lower panel 19 adjacent to the passenger compartment 12, and an electric power steering apparatus (not shown) adjacent to the engine room 13 is located close to the dashboard lower panel 19 so that the engine room 13 can be reduced in size. In this way, the instant embodiment can realize a vehicle of short overhang design with a reduced length from front wheels (not shown) to the front end of the vehicle.

Further, the left and right cross members 61 and 62 are fixedly joined to the joint cover 22 with the dashboard lower panel 19 sandwiched therebetween, so that the dashboard lower panel 19 can have an increased strength.

Further, in the embodiment of the front vehicle body structure 20, as shown in Figs. 4 and 5, the left and right cross members 61 and 62 and the joint cover 22 are disposed on the bent portion 42, so that the dashboard lower panel 19 can have an even further increased strength by virtue of a synergy effect between such disposed positions and inherent high rigidity of the bent portion 42.

As shown in Figs. 1 to 3, the dashboard lower panel extension (i.e., dashboard-lower-panel-strength increasing section) 26 is formed of a high-tension steel plate or the like having a high strength. The dashboard lower panel extension 26 has a middle portion protruding toward the passenger compartment 12, and a tunnel portion 81 continuously connected to the tunnel portion 47 of the dashboard lower panel 19. The dashboard lower panel extension 26 is fixedly connected at its rear end 26c to the front cross member 35.

The dashboard lower panel extension 26 is connected at its left and right ends 26a and 26b to rear end regions 32b of the slant portions 32 of the left and right front side frames 16, so that deformation of the fragile portion 46 can be promoted.

The dashboard lower panel extension 26 can have a great strength by being formed of a high-tension steel plate as noted above. Further, because the tunnel portion 81 of the dashboard lower panel extension 26 can be readily formed in a tunnel shape by press-forming, the vehicle body 11 can be reduced in weight and increase in strength.

The front cross member 35 comprises a body member 83 formed centrally thereon, and left and right connection members 84 and 85 formed on the left and right ends of the body member 83. The body member 83 is formed in an outwardly convex shape to extend along the inner surface of the center tunnel section (bulge section) 38 on the floor 37.

The left connection member 84 has an outer end 84a fixedly connected to a lower wall portion 32d of the slant portion 32 of the left front side frame 16, and an inner end 84b fixedly connected to the dashboard lower panel extension 26. Further, the left connection member 84 has a rear end 84c fixedly connected to the slant surface 43 of the dashboard lower panel 19.

Similarly, the right connection portion 85 has an outer end 85a fixedly connected to a lower wall portion 32d of the slant portion 32 of the right front side frame 16, and an inner end 85b fixedly connected to the dashboard lower panel extension 26. Further, the right connection portion 85 has a rear end 85c fixedly connected to the slant surface 43 of the dashboard lower panel 19.

The front cross member 35, comprising the body member 83 and left and right connection members 84 and 85, has a front end portion 35a formed in an arch shape (e.g., boomerang shape) as viewed in plan and fixedly connected to the dashboard lower panel extension 26. Such arrangements can achieve an increased area of joint, in the front-end direction, between the front cross member 35 and the dashboard lower panel extension 26.

Namely, with the inner ends 84b and 85b of the left and right connection members 84 fixed to the dashboard lower panel extension 26 of a high strength, the instant embodiment can increase a shear strength, in the front-rear direction, of the front cross member 35 and dashboard lower panel extension 26.

As shown in Fig. 3, the brake-booster mounting reinforcement 27 is a reinforcing plate, provided on the vertical surface 41 of the dashboard lower panel 19, for reinforcing the dashboard lower panel 19 to stably mount thereon a brake booster (not shown). The brake-booster mounting reinforcement 27 and the dashboard cross member 23 are not connected with each other. The brake booster is a device for increasing a braking force by assisting a brake pedal pressing force by use of negative pressure generated at the time of pressing of the brake pedal.

Because the brake-booster mounting reinforcement 27 and the dashboard cross member 23 are not connected with each other, the brake-booster mounting reinforcement 27 can be left uninfluenced by a frontal collision of the vehicle when the front side frames 16 rearwardly thrust and deform the dashboard cross member 23.

As shown in Fig. 4, the dashboard lower panel reinforcing plate 28 includes a reinforcing plate body portion 91 mounted to the dashboard lower panel 19, and a bent section 92 bent from the lower end of the reinforcing plate body portion 91 toward the passenger compartment 12 at a position ahead of the slant surface 43. A closed section 93 is defined by the dashboard lower panel 19 and bent section 92, which can increase the rigidity of the vehicle body 11.

The bent section 92 includes an extension 94 extending toward the rear of the vehicle body, a vertical portion 95 extending downward from the extension 94, and a flange portion 96 formed at the lower end of the vertical portion 95 and fixedly connected to the slant surface 43. A substantially L sectional shape is defined by the extension 94 and vertical portion 95.

With the closed section 93 defined by the dashboard lower panel 19 and bent section 92, the instant embodiment can, for example, reduce the length of the dashboard cross member 23 to thereby reduce the weight and cost of the vehicle body 11.

Because the end portion (joint portion) 67 of the left cross member 61 adjacent to the dashboard lower panel reinforcing plate 28 is formed in a substantially L cross-sectional shape as noted above, the bent section 92, formed in a substantially L sectional shape by the extension 94 and vertical portion 95, can be smoothly connected to the joint portion 67.

The extension 94 is formed to extend along the upper wall portion 32a of the slant portions 32 of the front side frames 16, so that a frontal collision load acting on the front side frames 16 can be sufficiently borne.

Note that the dashboard cross member 23 can be said to be constructed of the left and right cross members 61 and 62 and bent section 92 of the dashboard lower panel reinforcing plate 28 and can have a reduced length in the vehicle width direction.

As shown in Figs. 1 to 11, the first embodiment of the front vehicle body structure 20 of the present invention includes the left and right front side frames 16 extending in the front-rear direction of the vehicle body; the dashboard lower panel 19 partitioning between the engine room 13 and the passenger compartment 12; the joint cover 22 having the opening 15 for passage therethrough the steering shaft 21; and the dashboard cross member 23 reinforcing the dashboard lower panel 19. The dashboard lower panel 19 has the vertical surface 41 extending vertically above the slant portions 32 of the front side frames 16, and the slant surface 42 slanting from the vertical surface 41downward and rearwardly via the bent portion 42.

Further, in the first embodiment of the front vehicle body structure 20, the joint cover 22 is provided on the side of the dashboard lower panel 19 adjacent to the engine room 13 while the dashboard cross member 23 provided on the side of the dashboard lower panel 19 adjacent to the passenger compartment 12, and thus, a closed section can be defined adjacent to the passenger compartment 12 by the dashboard lower panel 19 and dashboard cross member 23. Consequently, the electric power steering apparatus (not shown) adjacent to the engine room 13 can be disposed close to the dashboard lower panel 19, so that the engine room 13 can be considerably reduced in size. Namely, the first embodiment of the front vehicle body structure 20 can secure a sufficient space within the engine room 13 and can effectively realize a vehicle of short overhang design with a reduced length from the front wheels to the front end of the vehicle.

Because the dashboard cross member 23 comprises the separate left right cross members 61 and 62 disposed to the left and right of the joint cover 22, and because the respective one end portions 66 and 76 of the left and right cross members 61 and 62 are fixedly connected to the joint cover 22 with the dashboard lower panel 19 sandwiched therebetween, the first embodiment of the front vehicle body structure 20 can achieve an increased strength of the dashboard lower panel 19 and hence an increased rigidity of the vehicle body 11.

Further, because the slant portions 32 of the left and right front side frames 16 each have the inwardly protruding portion 33 protruding in a dogleg shape inwardly in the vehicle width direction and the dashboard cross member 23 is disposed near the protruding portions 33, it is possible to prevent unwanted bending of the front side frames 16, and input force from the front side frames 16 can be transmitted, via the joint cover 22 and left right cross members 61 and 62, to a member, such as the front cross member 35, located rearward of the dashboard lower panel 19. As a result, the first embodiment of the front vehicle body structure 20 can effectively reduce an amount of deformation of the vehicle body 11.

Further, in the above-described embodiment of the front vehicle body structure 20, the joint cover 22 has: the opening 51 of a substantially circular shape for passage therethrough of the steering shaft 21; the step portion 53 formed by side and rear peripheral regions of the bottom portion 52 being raised obliquely upward; the front surface portion 54 of a curved shape formed by a front peripheral region of the bottom portion 52 being projected convexly outward; and the annular flange 56 formed continuously with the front surface flange 55 and around left and right sides and rear end of the step portion 53.

Further, in the above-described first embodiment of the front vehicle body structure 20, the left and right cross members 61 and 62 are each formed in a hat- or mountain-like cross-sectional shape, and the upper and lower flanges 64, 74, 65 and 75 are formed along the opposite edges of the hat- or mountain-like cross-sectional shape. The upper flanges 64 and 74 of the left and right cross members 61 and 62 are fixedly connected to the front surface flange 55 while the lower flanges 65 and 75 of the left and right cross members 61 and 62 are fixedly connected to the annular flange 56, so that input force from the front side frames 16 is transmitted to the left and right cross members 61 and 62 along the first edge line 58 formed between the bottom portion 52 and the curved front surface portion 54, and the second edge line 59 formed continuously with the first edge line 58 and between the bottom portion 52 and the step portion 53. As a result, the above-described first embodiment of the front vehicle body structure 20 can achieve an enhanced load transfer efficiency of the left and right cross members 61 and 62.

Further, because the dashboard lower panel 19 has the beads 45a to 45c provided on its portion of covered with the left cross member 61 and extending in the longitudinal direction of the left cross member 61, the above-described first embodiment of the front vehicle body structure 20 can achieve an enhanced load transfer efficiency, in the vehicle width direction, of the dashboard cross member 23.

Furthermore, because the left and right cross members 61 and 62 and the joint cover 22 are disposed on the bent portion 42, the dashboard lower panel 19 can have an even further increased strength by virtue of a synergy effect between such disposed positions and the inherent high rigidity of the bent portion 42.

Whereas the beads 45a to 45c are provided on a portion of the dashboard lower panel 19 covered with the left cross member 61 and extending in the longitudinal direction of the left cross member 61 as shown in Fig. 3, the front vehicle body structure 20 of the present invention is not so limited, and such beads may be provided on a portion of the dashboard lower panel 19 covered with the right cross member 62 and extending in the longitudinal direction of the right cross member 62. Namely, such beads may be provided on a portion of the dashboard lower panel 19 covered with at least one of the left and right cross members 61 and 62.

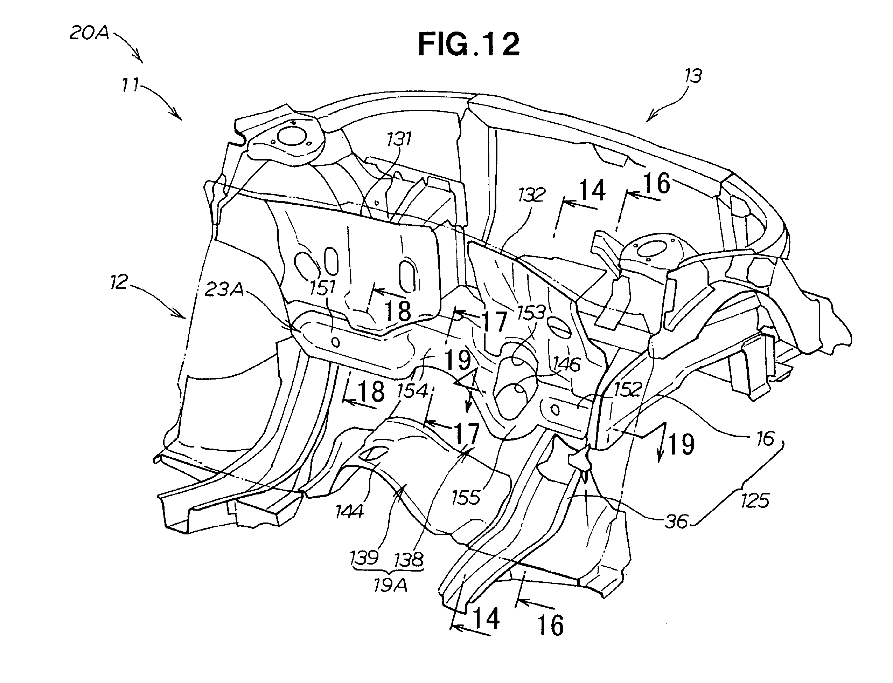

The following describe a second embodiment of the front vehicle body structure 20A of the present invention, with reference to Figs. 12 to 20B where similar elements to those in the first embodiment are indicated by the same reference numerals as used for the first embodiment and will not be described here to avoid unnecessary duplication.

As clearly seen in Figs. 12 to 15, the second embodiment of the front vehicle body structure 20A of the present invention includes: the dashboard lower panel 19A partitioning the vehicle body 11 into the engine room 13, having an engine 114 accommodated therein, and the passenger compartment 12; a dashboard upper panel 122 provided over the dashboard lower panel 19A to partition the vehicle body 11 into the engine room 13 and the passenger compartment 12; left and right longitudinal frames 125 that include the left and right front side frames 16 fixedly connected at their respective rear ends to the front ends of the left and right floor frames 36 and that extend in the front-rear direction of the vehicle body 11; a dashboard cross member 23A extending in the vehicle width direction and fixedly connected at its opposite end portions with the left and right longitudinal frames 125; and the front cross member 128 disposed behind the dashboard cross member 23A to interconnect the left and right longitudinal frames 125. The front vehicle body structure 20A further includes: a left reinforcing panel 131 connecting between left upper portions of the dashboard cross member 23A and dashboard lower panel 19A; a right reinforcing panel 132 connecting between right upper portions of the dashboard cross member 23A and dashboard lower panel 19A; a steering gearbox 133 provided on a lower end portion of the dashboard lower panel 19A; the steering shaft 21 extending upward from the steering gearbox 133 to the passenger compartment 12 through the dashboard lower panel 19A and dashboard cross member 23A; a passenger-compartment-side cover member 135 provided adjacent to the passenger compartment 12 and having the steering shaft 21 extended therethrough; and an engine-room-side cover member 136 provided adjacent to the engine room 13 and between the steering gearbox 133 and the dashboard lower panel 19A.

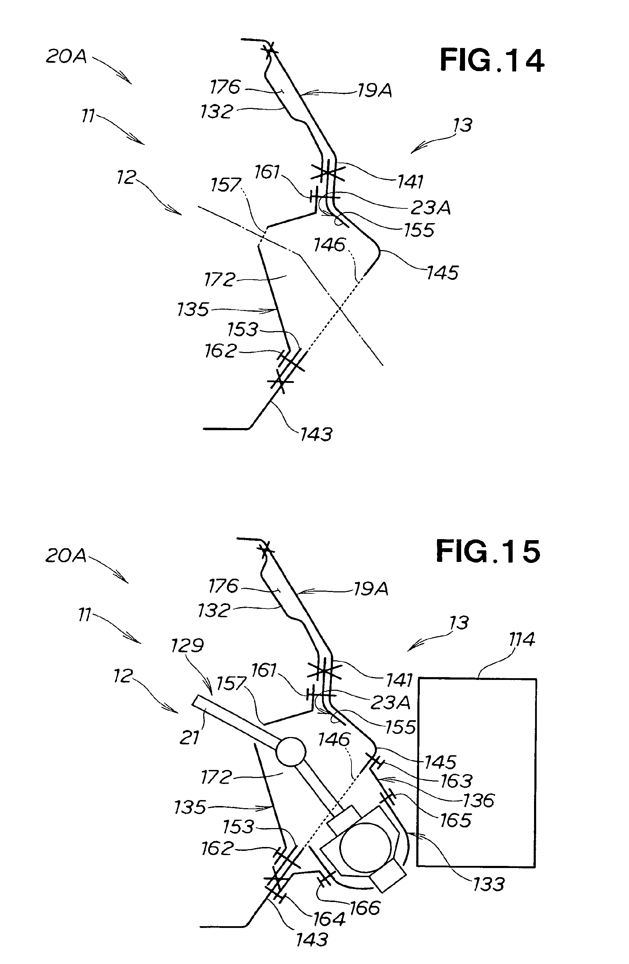

Each mark "X" shown in Fig. 14 to 19A indicates a welded portion. The steering gearbox 133 and the steering shaft 21 are component parts of the steering apparatus 129. The steering apparatus 129 includes, in addition to the above-mentioned steering gearbox 133 and steering shaft 21, a steering column (not shown) and steering wheel (not shown) as its main component parts.

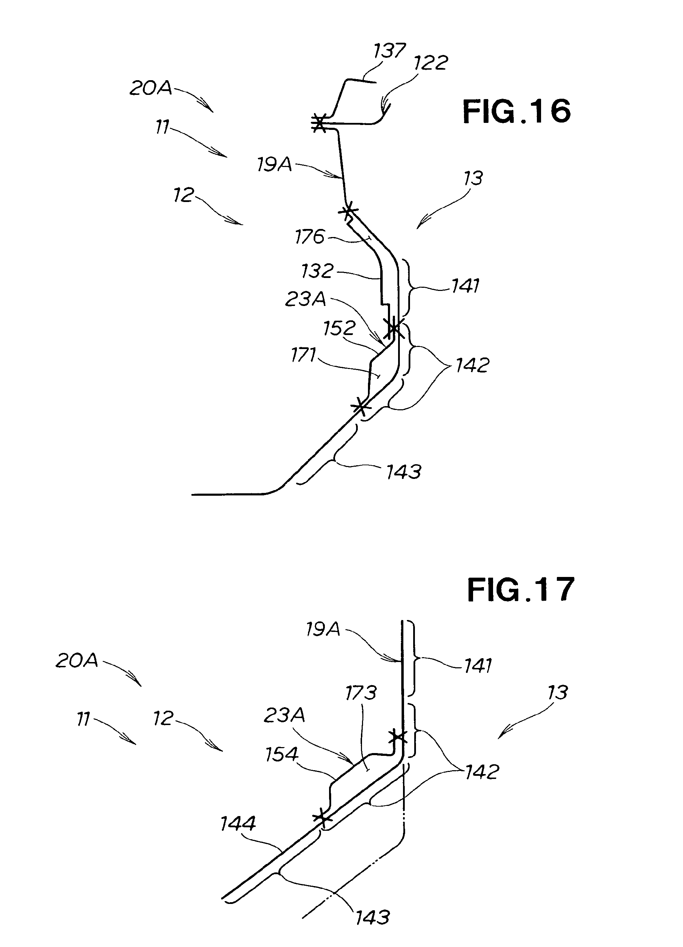

The dashboard lower panel 19A includes: a vertical portion 141 extending vertically or in a height direction of the vehicle body 11; a slant portion 143 slanting from the lower end of the vertical portion 141 downward toward the passenger compartment 12 via a bent portion 142 (see Fig. 16); a central tunnel portion 144 provided on a middle region, in the vehicle width direction, of the bent portion 142 and slant portion 143 and projecting toward the passenger compartment 12; a raised portion 145 raised toward one of left and right sides (e.g., right side) of the bent portion 142 and toward the engine room 13; and the opening 51 formed in the raised portion 145 for passage therethrough of the steering shaft 21.

Further, the dashboard lower panel 19A includes a thin plate section 138 and a thick plate section 139. The above-mentioned vertical portion 141, slant portion 143, raised portion 145, steering opening 146 and upper part of the tunnel portion 144 are formed on the thin plate section 138, and a lower part of the tunnel portion 144 is formed on the thick plate section 139 and has a high strength and rigidity.

Further, as shown in Fig. 16, the dashboard upper panel 122, windshield (not shown) and lower-windshield-end support plate 137 are provided over the dashboard lower panel 19A.

The left and right front side frames 16 extend in the front-rear direction of the vehicle body 11 under the engine room 13, and the left and right floor frames 36 extend from the rear ends of the left and right front side frames 16 to a region under the passenger compartment 12.

The left and right longitudinal frames 125, comprising the left and right front side frames 16 and the left and right floor frames 36 connected with the left and right front side frames 16, each have an inwardly protruding portion 148 formed on its longitudinally middle region and convexly curved or protruding inwardly in the vehicle width direction, i.e. toward the longitudinal centerline of the vehicle body 11. The dashboard cross member 23A is fixedly connected at its opposite end portions to front regions of the inwardly protruding portions 148 of the left and right longitudinal frames 125. The front cross member 128 is disposed behind the dashboard cross member 23A and the inwardly protruding portions 148.

In the second embodiment of the front vehicle body structure 20A of the present invention, the engine 114 is transversely mounted between the left and right front side frames 16, and a fuel tank 116 is disposed between the left and right floor frames 36. Because the fuel tank 116 is disposed centrally in the front-rear direction and vehicle width directions of the vehicle body, it is also called "center tank".

The left and right longitudinal frames 125, comprising the left and right front side frames 16 and the left and right floor frames 36, have inwardly-curved longitudinal frame portions 147 extending along the outer side surfaces of the engine room 13 and center tank 116. Longitudinally middle regions of the inwardly-curved longitudinal frame portions 147 are the aforementioned inwardly protruding portions 148.

Once a frontal collision of the vehicle happens, an inward buckling load acts on the left and right longitudinal frames 125. Thus, in the instant embodiment, the dashboard cross member 23A and front cross member 128 are provided between the left and right longitudinal frames 125 for preventing unwanted buckling. Further, the tunnel section 38 extends behind the tunnel portion 144 of the dashboard lower panel 19A.

The dashboard cross member 23A includes: a left straight portion 151 disposed on a left side region of the vehicle body 11 and fixedly connected to the left longitudinal frame 125; a right straight portion 152 disposed on a right side region of the vehicle body 11 and fixedly connected to the right longitudinal frame 125; an annular portion 155 provided inwardly of the right straight portion 152 (i.e., closer to the longitudinal centerline of the vehicle body 11) and having a cross-member-side opening 153 for passage therethrough of the steering shaft 21; and a curved portion 154 provided centrally between the left and right straight portions 151 and 152 and close to the tunnel portion 144 of the dashboard lower panel 19A. The cross-member-side opening 153 of the dashboard cross member 23A is formed in opposed relation to the raised portion 145.

The passenger-compartment-side cover member 135 has a cover-side opening 157 for passage therethrough of the steering shaft 21, and this cover member 135 is fastened to the annular portion 155 of the dashboard cross member 23A by means of bolts 161 and 162 as shown in Figs. 14 and 15. The cover-side opening 157 is smaller than the steering opening 146 formed in the raised portion 145 of the dashboard lower panel 19A.

Forming the steering opening 146 in a relatively large size can facilitate operation for assembling the steering shaft 21 to passenger-compartment-side component parts. On the other hand, forming the steering opening 146 in a relatively small size can achieve an increased strength and rigidity at and around the annular portion 155 of the dashboard cross member 23A.

The engine-room-side cover member 136 is fastened to the steering gearbox 133 and the dashboard lower panel 19A, by means of bolts 163 to 165, for closing a gap between the steering gearbox 133 and the dashboard lower panel 19A.

As shown in Figs. 14 and 15, the cross-member-side opening 153, formed in the dashboard cross member 23A for passage therethrough of the steering shaft 21, is closed by the passenger-compartment-side cover member 135, so that a later-described second closed section 172 is defined by the passenger-compartment-side cover member 135 and the raised portion 145 of the dashboard lower panel 19A as viewed in side cross-section. Thus, the steering gearbox 133 can be disposed close to the bent portion 142 of the dashboard lower panel 19A, with the result that the vehicle body can be reduced in size.

As shown in Fig. 15, the raised portion 145 raised toward one of left and right sides (e.g., right side) of the bent portion 142 and toward the engine room 13 is formed between the vertical portion 141 and the slant portion 143.

As shown in Fig. 16, the right reinforcing panel 132 defines a reinforcing closed section 176 in conjunction with the dashboard lower panel 19A, to thereby increase the rigidity of the dashboard lower panel 19A. Similarly, the left reinforcing panel 131 defines a reinforcing closed section (not shown) in conjunction with the dashboard lower panel 19A.

Namely, the dashboard lower panel 19A can have an increased strength and rigidity. The left and right reinforcing panels 131 and 132, provided between the dashboard cross member 23A and the dashboard upper panel 122, can further increase the strength and rigidity of the dashboard cross member 23A.

Further, as shown in Fig. 16, a first closed section 171 is defined by the bent portion 142 of the dashboard lower panel 19A and the right straight portion 152 of the dashboard cross member 23A as viewed in side cross-section. Further, as shown in Fig. 17, the first closed section 171 has a parallelogram shape projecting into the passenger compartment 12 as viewed in side cross-section. Because the first closed section 171 has a parallelogram shape like this, a projecting amount of the first closed section 171 into the passenger compartment 12 can be reduced.

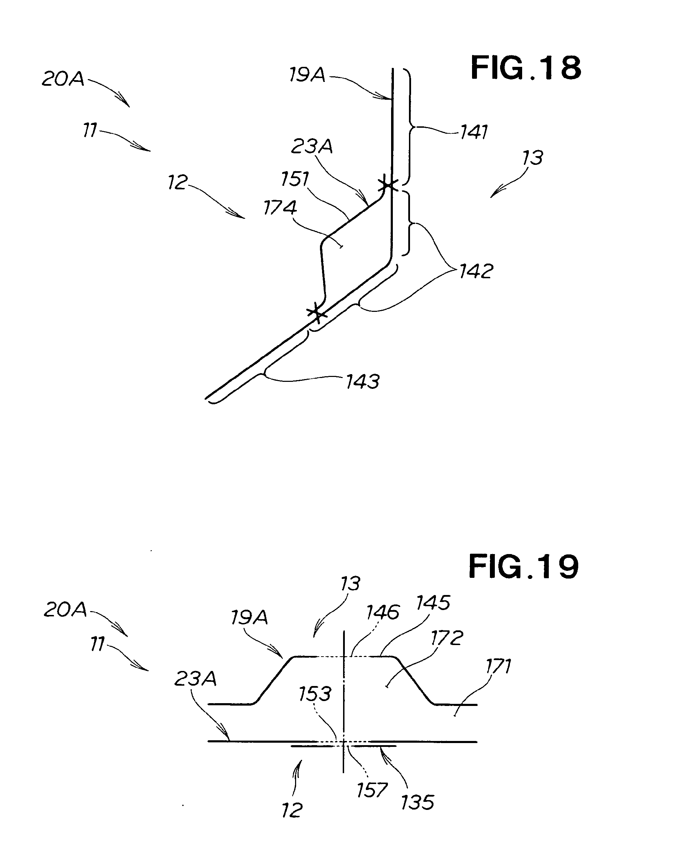

As noted above in relation to Fig. 14, the second closed section 172 is defined by the passenger-compartment-side cover member 135 and the raised portion 145 of the dashboard lower panel 19A as viewed in side cross-section. As shown in Fig. 19A, the first and second closed sections 171 and 172 are formed continuously with each other.

Further, as shown in Fig. 17, a third closed section 173 is defined by the bent portion 142 of the dashboard lower panel 19A and curved portion 154 of the dashboard cross member 23A. The third closed section 173 is a closed section of a substantially trapezoidal or semi-circular shape projecting from the raised upper surface of the central tunnel portion 144 of the dashboard lower panel 19A. Because of the substantially trapezoidal or semi-circular shape, the third closed section 173 can be press-formed with ease and can have an increased strength and rigidity.

Further, because the third closed section 173 is formed by providing the curved portion 154 on a middle region of the dashboard cross member 23A in proximity to the central tunnel portion 144 of a high rigidity.

Further, as shown in Fig. 18, a fourth closed section 174 is defined by the bent portion 142 of the dashboard lower panel 19A and left straight portion 151 of the dashboard cross member 23A. The fourth closed section 174 has a parallelogram shape projecting into the passenger compartment 12 as viewed in side cross-section. Note that the first to fourth closed sections 171 to 174 are formed in communication with one another in the vehicle width direction.

As set forth above in relation to Figs. 12 to 19, the front vehicle body structure 20A includes: the dashboard lower panel 19A partitioning the vehicle body 11 into the engine room 13 and the passenger compartment 12; the left and right longitudinal frames 125 that include the left and right front side frames 16 fixedly connected at their respective rear ends to the front ends of the left and right floor frames 36 and that extend in the front-rear direction of the vehicle body; the dashboard cross member 23A interconnecting the left and right longitudinal frames 125; and the steering shaft 21 passed through the dashboard lower panel 19A and dashboard cross member 23A.

Further, the dashboard lower panel 19A includes: the vertical portion 141 extending in the height direction of the vehicle body 11; the slant portion 143 slanting from the lower end of the vertical portion 141 toward the passenger compartment 12 via the bent portion 142; the raised portion 145 raised toward one of left and right sides of the bent portion 142 and toward the engine room 13; and the steering opening 146 formed in the raised portion 145 of the dashboard lower panel 19A for passage therethrough of the steering shaft 21.

The dashboard cross member 23A includes the annular portion 155 having the cross-member-side opening 153 formed, in opposed relation to the raised portion 145, for passage therethrough of the steering shaft 21. By the provision of such a cross-member-side opening 153 in the dashboard cross member 23A, the steering gearbox 133, to which the steering shaft 21 is connected, can be provided in a more rearward position beneath the slant portion 143 of the dashboard lower panel 19A. Thus, the engine 14 accommodated in the engine room 13 can be disposed in a more rearward position closer to the dashboard lower panel 19A. As a result, the length, in the front-rear direction, of the vehicle body can be significantly reduced, which can thereby achieve a reduced size of the vehicle body 11.

Further, the first closed section 171 is defined by the bent portion 142 and the dashboard cross member 23A as viewed in side cross-section, and the raised portion 145 of the dashboard lower panel 19 and the annular portion 155 of the dashboard cross member 23A overlap each other, the instant embodiment can not only achieve an enhanced strength and rigidity around the steering opening 146, but also secure a sufficient strength and rigidity of the dashboard cross member 23A.

Further, the left and right longitudinal frames 125 each have a longitudinally middle region curved in the inward direction of the vehicle body 11 (i.e., projecting toward the longitudinal centerline of the vehicle body 11), and the dashboard cross member 23A is mounted at its opposite end portions on the inwardly protruding portions 148 of the longitudinally middle regions. Thus, at the time of a frontal collision, the instant embodiment can prevent inward bending of the left and right longitudinal frames 125 extending in the front-rear direction of the vehicle body, and thus, it can smoothly disperse a collision load.

Further, because the first closed section 171 has a parallelogram shape projecting into the passenger compartment 12 as viewed in side cross-section, the instant embodiment can achieve an increased strength and rigidity of the dashboard cross member 23A. Further, the annular portion 155, continuing with the first closed section 171, can supplement the strength and rigidity of the dashboard cross member 23A.

Furthermore, by the provision of the passenger-compartment-side cover member 135 closing the cross-member-side opening 153 and the engine-room-side cover member 136 closing the steering opening 146 from the side of the engine room 13, the steering opening 146 can be formed in a large size, and thus, instant embodiment can facilitate operation for assembling the steering shaft 21.

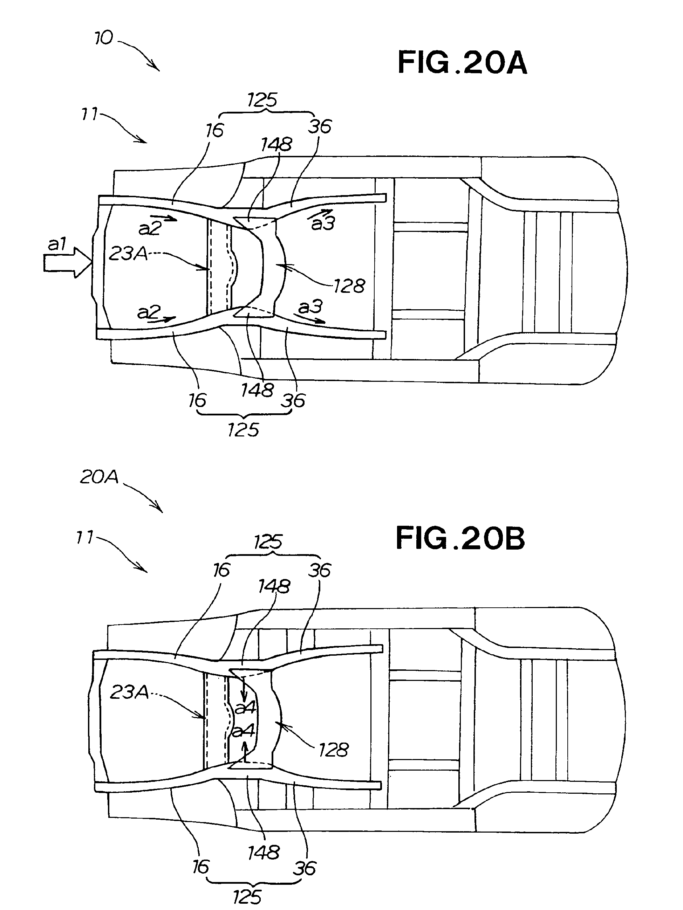

As a frontal collision load is applied from ahead of the vehicle body 11 as indicated by arrow a1 in Fig. 20A, the frontal collision load is transmitted to the left and right front side frames 16 as indicated by arrow a2, from which it is transmitted to the left and right floor frames 36 as indicated by arrow a3.

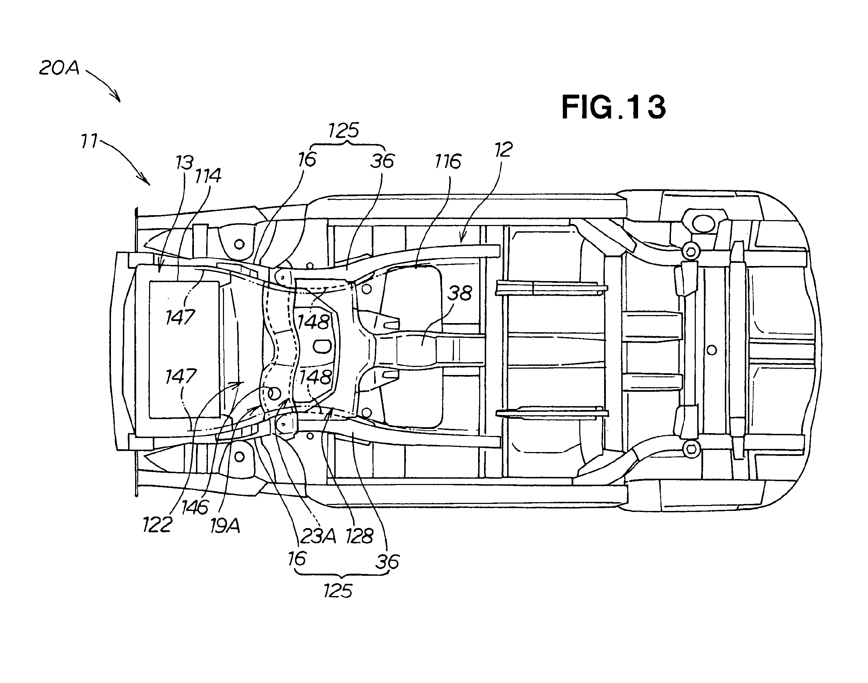

Furthermore, in the instant embodiment, as shown in Fig. 13, the engine 114 is transversely mounted between the left and right front side frames 16, the fuel tank 116 is disposed between the left and right floor frames 36, and the left and right longitudinal frames 125, comprising the left and right front side frames 16 and the left and right floor frames 36, have the inwardly protruding portions 148 formed on their longitudinally middle regions. Thus, at the time of a frontal collision, a buckling load a4 would occur in an inward direction of the left and right longitudinal frames 125 as indicated by arrow a4 in Fig. 20B, which would act to bend the left and right longitudinal frames 125 inwardly.

However, because the dashboard cross member 23A and front cross member 128 are arranged on the inwardly protruding portions 148 of the left and right longitudinal frames 125 in the mentioned order in the front-to-rear direction, the left and right longitudinal frames 125 can reliably resist the buckling load acting inwardly on the left and right longitudinal frames 125. Namely, the instant embodiment can prevent deformation of the left and right longitudinal frames 125 and permits smooth transmission of the frontal collision load.

Furthermore, in the second embodiment of the front vehicle body structure 20A, the fuel tank 116 storing fuel is disposed inwardly of the left and right longitudinal frames 125 and beneath the passenger compartment 12 (see Fig. 13), and the inwardly-curved longitudinal frame portions 147 of the left and right longitudinal frames 125 extend along the outer side surfaces of the engine room 13 and center tank 116. Further, the front cross member 128 interconnecting the inwardly protruding portions 148 of the left and right longitudinal frames 125 is disposed inwardly of the opposed longitudinal frame portions 147 and behind the dashboard cross member 23A. Thus, when a frontal collision happens, the instant embodiment can more reliably prevent inward bending of the left and right longitudinal frames 125 extending in the front-rear direction of the vehicle body than where only the dashboard cross member 23A interconnects the inwardly protruding portions 148 of the left and right longitudinal frames 125. In this way, the instant embodiment allows a collision load to be dispersed more smoothly.

Note that, whereas the raised portion 145 has been described as provided on a right side region of the vehicle body 11, the present invention is not so limited, and the raised portion 145 may be provided on any other region as long as it is located on the same side as the steering shaft 21. Namely, the raised portion 145 only need to be provided to the left or the right of the bent portion 142 and project toward the engine room 13.

The above-described front vehicle body structure of the present invention is well suited for application to vehicles of the short overhang design with a reduced length from front wheels to the front end of the vehicle.

The above-described front vehicle body structure of the present invention is well suited for application to automotive vehicles which include: a dashboard lower panel, left and right longitudinal frames comprising left and right front side frames and front and right floor frames; a dashboard cross member interconnecting the left and right longitudinal frames and a steering shaft passed through the dashboard lower panel and dashboard cross member.

## Claims

1. A front vehicle body structure (20) comprising: left and right front side frames (16) extending in a front-rear direction of a vehicle body (11); a dashboard lower panel (19) extending in a vehicle width direction to partition between an engine room (13) and a passenger compartment (12); a joint cover (22) having an opening (51) formed therein; and a dashboard cross member (23) extending in the vehicle width direction to reinforce the dashboard lower panel (19),
the dashboard lower panel (19) having a vertical surface (41) extending substantially vertically above respective slant portions (32) of the left and right front side frames, and a slant surface (43) slanting from the vertical surface (41) obliquely downward toward a rear of the vehicle body via a bent portion (42) of the dashboard lower panel,
**characterized in that** the joint cover (22) is provided on a side of the dashboard lower panel (19) adjacent to the engine room (13), the dashboard cross member (23) is provided on a side of the dashboard lower panel adjacent to the passenger compartment (12), and the dashboard cross member (23) includes separate left and right cross members (61, 62) disposed to left and right, respectively, of the joint cover (22),
the left and right cross members (61, 62) are fixedly connected at respective one end portions to the joint cover (22) with the dashboard lower panel (19) sandwiched therebetween, and
a steering shaft (21) is passed through the opening (51) formed in the joint cover (22).

2. The front vehicle body structure of claim 1, wherein the slant portion (32) of each of the left and right front side frames (16) includes a protruding portion (33) protruding in a dogleg shape inwardly in the vehicle width direction, and the dashboard cross member (23) is disposed on the protruding portions (32) of the left and right front side frames (16).

3. The front vehicle body structure of claim 1 or 2, wherein the joint cover (22) has: a bottom portion (52) of a substantially circular shape having formed therein the opening (51) for passage therethrough of the steering shaft (21); a step portion (53) formed by side and rear peripheral regions of the bottom portion (52) being raised upward; a front surface portion (54) of a curved shape formed by a front peripheral region of the bottom portion being projected convexly outward; a front surface flange (55) formed outside and around the front surface portion (54); and an annular flange (56) formed continuously with the front surface flange (55) and outside and around the step portion (53), and
wherein the left and right cross members (61, 62) each include a cross member body (63, 73) having a hat- or mountain-like cross-sectional shape, and upper and lower flanges (64, 65, 74, 75) formed at opposite sides of the hat- or mountain-like cross-sectional shape of the cross member body (63, 73), the upper flange (64, 74) of each of the left and right cross members (61, 62) being fixedly connected to the front surface flange (55), the lower flange (65, 75) of each of the left and right cross members being fixedly connected to the annular flange (56).

4. The front vehicle body structure of any one of claims 1 to 3, wherein the dashboard lower panel (19) has a bead (45a - 45c) provided on a portion thereof covered with at least one of the left and right cross members (61, 62), the bead extending in a longitudinal direction of the left and right cross members.

5. The front vehicle body structure according to any one of claims 1 to 4, wherein the left and right cross members (61, 62) and the joint cover (22) are disposed on the bent portion (42) of the dashboard lower panel (19).

6. A front vehicle body structure (20A) comprising: a dashboard lower panel (19A) partitioning a vehicle body (11) into an engine room (13) and a passenger compartment (12); left and right longitudinal frames (125) that include left and right front side frames (16) fixedly connected at respective rear ends thereof to front ends of left and right floor frames (36) and that extend in a front-rear direction of the vehicle body; and a dashboard cross member (23A) extending in a vehicle width direction of the dashboard lower panel (19A) to connect to the left and right longitudinal frames (125),
the dashboard lower panel (19A) including: a vertical portion (141) extending in a height direction of the vehicle body; a slant portion (143) slanting from a lower end of the vertical portion (141) downward toward the passenger compartment (12) via a bent portion (142) of the lower panel; and a raised portion (145) raised toward the engine room (13),
**characterized in that** the raised portion (145) of the dashboard lower panel (19A) is further raised toward one of left and right sides of the bent portion (142), and a steering opening (146) is formed in the raised portion (145),
the dashboard cross member (23A) includes an annular portion (155) having a cross-member-side opening (153) formed therein, in opposed relation to the raised portion (145),
a steering shaft (21) is passed through the steering opening (146) formed in the raised portion (145) of the dashboard lower panel (19A), and through the cross-member side opening (153) formed in the dashboard cross member (23A), and
a closed section (171) is defined by the bent portion (142) and the dashboard cross member (23A) as viewed from side, the raised portion (145) of the dashboard lower panel and the annular portion (155) of the dashboard cross member overlapping with each other.

7. The front vehicle body structure of claim 6, wherein the left and right longitudinal frames (125) each have an inwardly curved frame portion (147) that is curved inwardly of the vehicle body and has an inwardly protruding portion (148), and the dashboard cross member is disposed on the inwardly protruding portions (148) of the left and right longitudinal frames (16).

8. The front vehicle body structure of claim 6 or 7, wherein the closed section (171) has a parallelogram shape projecting toward the passenger compartment (12) as viewed in side cross-section.

9. The front vehicle body structure of any one of claims 6 to 8, which further comprises a passenger-compartment-side cover member (135) closing the cross-member-side opening (153), and an engine-room-side cover member (136) closing the steering opening (146) from a side of the engine room (13).

10. The front vehicle body structure of any one of claims 7 to 9, wherein a center tank (116) storing fuel is disposed inwardly of the left and right longitudinal frames (125) and beneath the passenger compartment (12), and the curved frame portions (147) of the left and right longitudinal frames (125) are curved inwardly in the vehicle width direction along outer side surfaces of the engine room (13) and the center tank (116), and
which further comprises a front cross member (128) interconnecting the inwardly protruding portions (148) of the left and right longitudinal frames, the front cross member (128) being disposed inwardly of the inwardly curved frame portions (147) and behind the dashboard cross member.

## Patentansprüche

1. Fahrzeugkörper-Vorderstruktur (20), umfassend: linke und rechte vordere Seitenrahmen (16), welche sich in einer Vorne-Hinten-Richtung eines Fahrzeugkörpers (11) erstrecken; eine Armaturenbrett-Unterplatte (19), welche sich in einer Fahrzeugbreitenrichtung erstreckt, um zwischen einem Motorraum (13) und einem Fahrgastraum (12) zu unterteilen; eine Verbindungsabdeckung (22), welche eine darin ausgebildete Öffnung (51) hat; und ein Armaturenbrett-Querelement (23), welches sich in der Fahrzeugbreitenrichtung erstreckt, um die Armaturenbrett-Unterplatte (19) zu verstärken,
wobei die Armaturenbrett-Unterplatte (19) eine vertikale Fläche (41) hat, welche sich im Wesentlichen vertikal über jeweiligen geneigten Abschnitten (32) von den linken und rechten vorderen Seitenrahmen erstrecken, und eine geneigte Fläche (43) hat, welche von der vertikalen Fläche (41) schräg nach unten zu einer Rückseite von dem Fahrzeugkörper über einen gebogenen Abschnitt (42) von der Armaturenbrett-Unterplatte geneigt ist,
**dadurch gekennzeichnet, dass**
die Verbindungsabdeckung (22) auf einer Seite von der Armaturenbrett-Unterplatte (19) benachbart dem Motorraum (13) vorgesehen ist, das Armaturenbrett-Querelement (23) auf einer Seite von der Armaturenbrett-Unterplatte benachbart dem Fahrgastraum (12) vorgesehen ist und das Armaturenbrett-Querelement (23) separate linke und rechte Querelemente (61, 62) umfasst, welche jeweils links und rechts von der Verbindungsabdeckung (22) angeordnet sind,
die linken und rechten Querelemente (61, 62) fest an jeweiligen einen Endabschnitten mit der Verbindungsabdeckung (22) verbunden sind,
wobei die Armaturenbrett-Unterplatte (19) dazwischenliegend aufgenommen ist, und
eine Lenkwelle (21) durch die in der Verbindungsabdeckung (22) ausgebildete Öffnung (51) hindurchgeführt ist.

2. Fahrzeugkörper-Vorderstruktur nach Anspruch 1, wobei der geneigte Abschnitt (32) von jedem von den linken und rechten vorderen Seitenrahmen (16) einen vorstehenden Abschnitt (33) umfasst, welcher in einer abgeknickten Form einwärts in der Fahrzeugbreitenrichtung vorsteht, und das Armaturenbrett-Querelement (23) auf den vorstehenden Abschnitten (32) von den linken und rechten vorderen Seitenrahmen (16) angeordnet ist.

3. Fahrzeugkörper-Vorderstruktur nach Anspruch 1 oder 2, wobei die Verbindungsabdeckung (22) aufweist: einen Bodenabschnitt (52) von einer im Wesentlichen kreisförmigen Form, welche darin ausgebildet die Öffnung (51) für den Durchgang der Lenkwelle (21) hindurch hat;
einen Stufenabschnitt (53), welcher durch seitliche und hintere Randbereiche von dem Bodenabschnitt (52) gebildet ist, welche nach oben ansteigen; einen Vorderflächenabschnitt (54) von einer gekrümmten Form, welcher durch einen vorderen Randbereich von dem Bodenabschnitt gebildet ist, welcher konvex auswärts vorsteht; einen Vorderflächenflasch (55), welcher außerhalb und um den Vorderflächenabschnitt (54) herum ausgebildet ist; und einen Ringflansch (56), welcher kontinuierlich mit dem Vorderflächenflansch (55) und außerhalb und um den Stufenabschnitt (53) herum ausgebildet ist, und
wobei die linken und rechten Querelemente (61, 62) jeweils einen Querelementkörper (63, 73) umfassen, welcher eine hut- oder bergartige Querschnittsform hat, und obere und untere Flansche (64, 65, 74, 75), welche an gegenüberliegenden Seiten der hut- oder bergartigen Querschnittsform von dem Querelementkörper (63, 73) ausgebildet sind, der obere Flansch (64, 74) von jedem von den linken und rechten Querelementen (61, 62) fest mit dem Vorderflächenflansch (55) verbunden ist, der untere Flansch (65, 75) von jedem von den linken und rechten Querelementen fest mit dem ringförmigen Flansch (56) verbunden ist.

4. Fahrzeugkörper-Vorderstruktur nach einem der Ansprüche 1 bis 3, wobei die Armaturenbrett-Unterplatte (19) einen Wulst (45a bis 45c) hat, welcher auf einem Abschnitt davon vorgesehen ist, welcher mit wenigstens einem von den linken und rechten Querelementen (61, 62) abgedeckt ist, wobei der Wulst sich in einer Längsrichtung der linken und rechten Querelemente erstreckt.

5. Fahrzeugkörper-Vorderstruktur nach einem der Ansprüche 1 bis 4, wobei die linken und rechten Querelemente (61, 62) und die Verbindungsabdeckung (22) auf dem gebogenen Abschnitt (42) von der Armaturenbrett-Unterplatte (19) angeordnet sind.

6. Fahrzeugkörper-Vorderstruktur (20A), umfassend: eine Armaturenbrett-Unterplatte (19A), welche einen Fahrzeugkörper (11) in einen Motorraum (13) und einen Fahrgastraum (12) unterteilt; linke und rechte Längsrahmen (125), welche linke und rechte vordere Seitenrahmen (16) umfassen, welche an jeweilig hinteren Enden davon fest mit vorderen Enden von linken und rechten Bodenrahmen (36) verbunden sind und welche sich in einer Vorne-Hinten-Richtung des Fahrzeugkörpers erstrecken; und ein Armaturenbrett-Querelement (23A), welches sich in einer Fahrzeugbreitenrichtung von der Armaturenbrett-Unterplatte (19a) erstrecken, um mit linken und rechten Längsrahmen (125) verbunden zu sein,
wobei die Armaturenbrett-Unterplatte (19A) umfasst: einen vertikalen Abschnitt (141), welcher sich in einer Höhenrichtung des Fahrzeugkörpers erstreckt; einen geneigten Abschnitt (143), welcher sich von einem unteren Ende von dem vertikalen Abschnitt (141) nach unten zu dem Fahrgastraum (12) über einen gebogenen Abschnitt (142) von der Unterplatte hin neigt; und einen ansteigenden Abschnitt (145), welcher zu dem Motorraum (13) hin ansteigt,
**dadurch gekennzeichnet, dass**
der ansteigende Abschnitt (145) von der Armaturenbrett-Unterplatte (19A) ferner zu einer von linken und rechten Seiten von dem gebogenen Abschnitt (142) ansteigt und eine Lenköffnung (146) in dem ansteigenden Abschnitt (145) ausgebildet ist,
das Armaturenbrett-Querelement (23A) einen ringförmigen Abschnitt (155) umfasst, welcher eine darin ausgebildete querelementseitige Öffnung (153) hat, in gegenüberliegender Beziehung zu dem ansteigenden Abschnitt (145),
eine Lenkwelle (21) durch die Lenköffnung (146) hindurchgeführt ist, welche in dem ansteigenden Abschnitt (145) von der Armaturenbrett-Unterplatte (19A) ausgebildet ist und durch die querelementseitige Öffnung (153), welche in dem Armaturenbrett-Querelement (23A) ausgebildet ist, und
ein geschlossener Bereich (171) durch den gebogenen Abschnitt (142) und das Armaturenbrett-Querelement (23A) von der Seite aus gesehen definiert ist, wobei der ansteigende Abschnitt (145) von der Armaturenbrett-Unterplatte und der ringförmige Abschnitt (155) von dem Armaturenbrett-Querelement einander überlappen.

7. Fahrzeugkörper-Vorderstruktur nach Anspruch 6, wobei die linken und rechten Längsrahmen (125) jeweils einen einwärts gekrümmten Rahmenabschnitt (147) haben, welcher einwärts von dem Fahrzeugkörper gekrümmt ist und einen einwärts vorstehenden Abschnitt (148) hat, und das Armaturenbrett-Querelement auf den einwärts vorstehenden Abschnitten (148) von den linken und rechten Längsrahmen (16) angeordnet ist.

8. Fahrzeugkörper-Vorderstruktur nach Anspruch 6 oder 7, wobei der geschlossene Abschnitt (171) eine Parallelogrammform hat, welche in einem Seitenquerschnitt gesehen, zu dem Fahrgastraum (12) hin vorsteht.

9. Fahrzeugkörper-Vorderstruktur nach einem der Ansprüche 6 bis 8, welche ferner ein Fahrgastraum-seitiges Abdeckungselement (135) umfasst, welches die Querelement-seitige Öffnung (153) schließt, und ein Motorraum-seitiges Abdeckungselement (136) umfasst, welches die Lenköffnung (146) von einer Seite von dem Motorraum (13) schließt.

10. Fahrzeugkörper-Vorderstruktur nach einem der Ansprüche 7 bis 9, wobei ein Zentraltank (116), welcher Kraftstoff bevorratet, einwärts von den linken und rechten Längsrahmen (125) und unterhalb des Fahrgastraums (12) angeordnet ist, und die gekrümmten Rahmenabschnitte (147) von den linken und rechten Längsrahmen (125) in der Fahrzeugbreitenrichtung entlang äußerer Seitenflächen von dem Motorraum (13) und dem Zentraltank (116) einwärts gekrümmt sind, und
welche ferner ein vorderes Querelement (128) umfasst, welches die einwärts vorstehenden Abschnitte (148) von den linken und rechten Längsrahmen verbindet, wobei das vordere Querelement (128) einwärts von den einwärts gekrümmten Rahmenabschnitten (147) und hinter dem Armaturenbrett-Querelement angeordnet ist.

## Revendications

1. Structure de carrosserie frontale de véhicule (20) comprenant : des châssis latéraux frontaux gauche et droit (16) s'étendant dans une direction avant-arrière d'une carrosserie de véhicule (11) ; un panneau inférieur de tableau de bord (19) s'étendant dans le sens de la largeur du véhicule pour se partager entre un espace de moteur (13) et un compartiment de passagers (12) ; un couvre-joint (22) ayant une ouverture (51) formée à l'intérieur de ce dernier ; et une traverse de tableau de bord (23) s'étendant dans le sens de la largeur du véhicule pour renforcer le panneau inférieur de tableau de bord (19),
le panneau inférieur de tableau de bord (19) ayant une surface verticale (41) s'étendant sensiblement verticalement au-dessus de parties inclinées (32) respectives des châssis latéraux frontaux gauche et droit, et une surface inclinée (43) s'inclinant à partir de la surface verticale (41) obliquement vers le bas vers l'arrière de la carrosserie de véhicule via une partie courbée (42) du panneau inférieur de tableau de bord,
**caractérisée en ce que** le couvre-joint (22) est prévu sur un côté du panneau inférieur de tableau de bord (19) adjacent à l'espace de moteur (13), la traverse de tableau de bord (23) est prévue sur un côté du panneau inférieur de tableau de bord adjacent au compartiment de passagers (12), et la traverse de tableau de bord (23) comprend des traverses gauche et droite (61, 62) séparées, disposées à gauche et à droite respectivement du couvre-joint (22),
les traverses gauche et droite (61, 62) sont raccordées de manière fixe, au niveau des parties d'extrémité respectives, au couvre-joint (22) avec le panneau inférieur de tableau de bord (19) pris en sandwich entre elles, et
un arbre de direction (21) passe à travers l'ouverture (51) formée dans le couvre-joint (22).

2. Structure de carrosserie frontale de véhicule selon la revendication 1, dans laquelle la partie inclinée (32) de chacun des châssis latéraux frontaux gauche et droit (16) comprend une partie en saillie (33) faisant saillie selon une forme de patte de chien vers l'intérieur dans le sens de la largeur du véhicule, et la traverse de tableau de bord (23) est disposée sur les parties en saillie (32) des châssis latéraux frontaux gauche et droit (16).

3. Structure de carrosserie frontale de véhicule selon la revendication 1 ou 2, dans laquelle le couvre-joint (22) a : une partie inférieure (52) ayant une forme sensiblement circulaire formée à travers l'ouverture (51) pour le passage de l'arbre de direction (21) ; une partie étagée (53) formée par les régions périphériques latérale et arrière de la partie inférieure (52) qui est relevée ; une partie de surface frontale (54) de forme incurvée formée par une région périphérique frontale de la partie inférieure qui fait saillie de manière convexe vers l'extérieur; un rebord de surface avant (55) formé vers l'extérieur et autour de la partie de surface frontale (54) ; et un rebord annulaire (56) formé de manière continue avec le rebord de surface avant (55) et vers l'extérieur et autour de la partie étagée (53), et
dans laquelle les traverses gauche et droite (61, 62) comprennent chacune un corps de traverse (63, 73) ayant une forme transversale en forme de chapeau ou de montagne, et des rebords supérieur et inférieur (64, 65, 74, 75) formés au niveau des côtés opposés de la forme transversale de chapeau de montagne du corps de traverse (63, 73), le rebord supérieur (64, 74) de chacune des traverses gauche et droite (61, 62) étant raccordé de manière fixe au rebord de surface avant (55), le rebord inférieur (65, 75) de chacune des traverses gauche et droite étant raccordé de manière fixe au rebord annulaire (56).

4. Structure de carrosserie frontale de véhicule selon l'une quelconque des revendications 1 à 3, dans laquelle le panneau inférieur de tableau de bord (19) a un bourrelet (45a-45c) prévu sur sa partie recouverte avec au moins les traverses gauche et droite (61, 62), le bourrelet s'étendant dans une direction longitudinale des traverses gauche et droite.

5. Structure de carrosserie frontale de véhicule selon l'une quelconque des revendications 1 à 4, dans laquelle les traverses gauche et droite (61, 62) et le couvre-joint (22) sont disposés sur la partie courbée (42) du panneau inférieur de tableau de bord (19).

6. Structure de carrosserie frontale de véhicule (20A) comprenant : un panneau inférieur de tableau de bord (19A) séparant une carrosserie de véhicule (11) en un espace de moteur (13) et en un compartiment de passagers (12) ; des châssis longitudinaux gauche et droit (125) qui comprennent les châssis latéraux frontaux gauche et droit (16) raccordés de manière fixe, au niveau de leurs extrémités arrière respectives, aux extrémités avant des châssis de plancher gauche et droit (36) et qui s'étendent dans une direction avant-arrière de la carrosserie de véhicule ; et une traverse de tableau de bord (23A) s'étendant dans le sens de la largeur du véhicule du panneau inférieur de tableau de bord (19A) pour se raccorder aux châssis longitudinaux gauche et droit (125), le panneau inférieur de tableau de bord (19A) comprenant :
une partie verticale (141) s'étendant dans le sens de la hauteur de la carrosserie de véhicule ; une partie inclinée (143) s'étendant à partir d'une extrémité inférieure de la partie verticale (141) vers le bas vers le compartiment de passagers (12) via une partie courbée (142) du panneau inférieur; et une partie relevée (145) relevée vers l'espace de moteur (13),
**caractérisée en ce que** la partie relevée (145) du panneau inférieur de tableau de bord (19A) continue à être relevée vers l'un des côtés gauche et droit de la partie courbée (142) et une ouverture de direction (146) est formée dans la partie relevée (145),
la traverse de tableau de bord (23A) comprend une partie annulaire (155) ayant une ouverture du côté de la traverse (153) formée à l'intérieur de cette dernière, en relation opposée à la partie relevée (145),
un arbre de direction (21) passe à travers l'ouverture de direction (146) formée dans la partie relevée (145) du panneau inférieur de tableau de bord (19A), et par l'ouverture du côté de la traverse (153) formée dans la traverse de tableau de bord (23A),
et
une section fermée (171) est définie par la partie courbée (142) et la traverse de tableau de bord (23A) comme observé depuis le côté, la partie relevée (145) du panneau inférieur de tableau de bord et la partie annulaire (155) de la traverse de tableau de bord se chevauchant.

7. Structure de carrosserie frontale de véhicule selon la revendication 6, dans laquelle les châssis longitudinaux gauche et droit (125) ont chacun une partie de châssis incurvée vers l'intérieur (147) qui est incurvée vers l'intérieur de la carrosserie de véhicule et a une partie en saillie vers l'intérieur (148), et la traverse de tableau de bord est disposée sur les parties en saillie vers l'intérieur (148) des châssis longitudinaux gauche et droit (16).

8. Structure de carrosserie frontale de véhicule selon la revendication 6 ou 7, dans laquelle la section fermée (171) a une forme de parallélogramme faisant saillie vers le compartiment de passagers (12), comme observé en coupe latérale.

9. Structure de carrosserie frontale de véhicule selon l'une quelconque des revendications 6 à 8, qui comprend en outre un élément formant couvercle du côté du compartiment de passagers (135) fermant l'ouverture du côté de la traverse (153), et un élément formant couvercle du côté de l'espace de moteur (136) fermant l'ouverture de direction (146) depuis un côté de l'espace de moteur (13).

10. Structure de carrosserie frontale de véhicule selon l'une quelconque des revendications 7 à 9, dans laquelle un réservoir central (116) stockant du carburant est disposé vers l'intérieur des châssis longitudinaux gauche et droit (125) et sous le compartiment de passagers (12), et les parties de châssis incurvées (147) des châssis longitudinaux gauche et droit (125) sont incurvées vers l'avant dans le sens de la largeur du véhicule le long des surfaces latérales externes de l'espace de moteur (13) et du réservoir central (116), et
qui comprend en outre une traverse frontale (128) interconnectant les parties en saillie vers l'intérieur (148) des châssis longitudinaux gauche et droit, la traverse frontale (128) étant disposée vers l'intérieur des parties de châssis incurvées vers l'intérieur (147) et derrière la traverse de tableau de bord.
